# EUROPÄISCHE PATENTSCHRIFT

(11) **EP 3 679 261 B1**
(45) Veröffentlichungstag und Bekanntmachung des Hinweises auf die Patenterteilung: **24.11.2021**
(21) Anmeldenummer: 18765556.8
(22) Anmeldetag: 21.08.2018
(51) Int. Cl.: F16D 1/04, F16D 1/08

(54) **ANORDNUNG ZUR KRAFTSCHLÜSSIGEN VERBINDUNG EINER ADAPTERWELLE MIT EINER WELLE MITTELS EINES SPANNRINGS**
ASSEMBLY FOR CONNECTING AN ADAPTER SHAFT TO A SHAFT IN A FORCE-FITTING MANNER USING A CLAMPING RING
ENSEMBLE PERMETTANT DE RÉALISER UN ASSEMBLAGE À FORCE ENTRE UN ARBRE ADAPTATEUR ET UN ARBRE AU MOYEN D'UN ANNEAU DE SERRAGE

(30) Priorität: 08.09.2017 DE 102017008437
(43) Veröffentlichungstag der Anmeldung: 15.07.2020
(73) Patentinhaber: SEW-EURODRIVE GmbH & Co. KG, 76646 Bruchsal (DE)
(72) Erfinder: SCHILLINGER, Jens, 76437 Rastatt (DE); HALLER, Sascha, 76135 Karlsruhe (DE); WÖPPERMANN , Markus, 76307 Karlsbad (DE)
(86) Internationale Anmeldenummer: PCT/EP2018/025220
(87) Internationale Veröffentlichungsnummer: WO 2019/048082

(56) Entgegenhaltungen:
- DE-A1- 19 844 828
- DE-A1-102012 000 537
- GB-A- 132 886

## Beschreibung

Die Erfindung betrifft eine Anordnung zur kraftschlüssigen Verbindung einer Adapterwelle mit einer Welle mittels eines Spannrings.

Aus der DE 10 2014 007 063 A1 ist eine Welle-Nabe-Verbindung bekannt. Dabei wird eine Adapterwelle mittels auf der Adapterwelle aufgestecktem Spannring mit einer Welle verbunden.

**Aus der** DE 10 2012 000537 A1 **ist als nächstliegender Stand der Technik eine Welle-Nabe-Verbindung bekannt.**

**Aus der** DE 198 44 828 A1 **ist ein Verkupplungssystem zwischen einer Welle und einem hohlen Blindorgan für Planetengetriebe bekannt.**

**Aus der** GB 132 886 A **ist eine verbesserte Kupplung bekannt.**

Der Erfindung liegt daher die Aufgabe zugrunde, eine kraftschlüssige Verbindung zwischen Welle und Adapterwelle weiterzubilden.

Erfindungsgemäß wird die Aufgabe bei der Anordnung nach den in Anspruch 1 angegebenen Merkmalen gelöst.

Wichtige Merkmale der Erfindung bei der Anordnung zur kraftschlüssigen Verbindung einer Adapterwelle mit einer Welle mittels eines Spannrings sind, dass der Spannring auf die Adapterwelle aufgesteckt ist,

wobei die Welle in die Adapterwelle eingesteckt ist,
wobei der Spannring eine radial durchgehende Gewindebohrung aufweist, in welche ein Schraubteil, insbesondere Gewindestift, eingeschraubt ist, dass auf die Adapterwelle drückt,
wobei zumindest ein Einlegering in einer in den Spannring eingebrachten Ringnut, insbesondere in einer in die Innenwandung, insbesondere also in die hohle Seite, des Spannrings eingebrachten Ringnut eingelegt ist und/oder zumindest teilweise aufgenommen ist,
wobei der oder jeder Einlegering einen nach radial innen hervorragenden Nasenbereich aufweist, welcher in einen Schlitz der Adapterwelle zumindest teilweise hineinragt.

Von Vorteil ist dabei, dass eine Verliersicherung gebildet ist, insbesondere sowohl in axialer Richtung als auch in Umfangsrichtung. Dabei ist die Erfindung einfach realisierbar und benötigt keine weiteren besonderen Mittel mit Ausnahme des Einlegeteils.

Infolge der Axialschlitze ist die Adapterwelle elastisch auslenkbar und somit andrückbar an die Hohlwelle, sobald der Gewindestift auf die Adapterwelle drückt. Dabei wird das Aufschrumpfen bewirkt. Für den Gewindestift ist eine durch den Spannring durchgängige Gewindebohrung vorhanden. Die Vertiefungen hingegen sind nicht durchgehend ausgeführt, insbesondere nicht an der Adapterwelle und auch nicht am Spannring.

Unter Aufschrumpfen wird hier nicht ein thermisch bedingtes Sich-Zusammenziehen verstanden, sondern ein mechanisch bedingtes Sich-Zusammenziehen.

Somit verbessert die Erfindung die Sicherheit einer kraftschlüssigen Verbindung zwischen Welle und Adapterwelle, indem ein Spannring zum Aufschrumpfen der einen Hohlwellenberiech aufweisenden Adapterwelle verwendet ist, der verliersicher, insbesondere in axialer Richtung und in Umfangsrichtung verliersicher auf der Adapterwelle angeordnet ist.

Bei einer vorteilhaften Ausgestaltung ist der Schlitz radial durchgehend, insbesondere durch die Wandung der hohlen Adapterwelle,
- wobei der Schlitz ein Axialschlitz ist, also sich in axialer Richtung bezogen auf die Wellenachse der Adapterwelle erstreckt,
- oder wobei der Schlitz ein Querschlitz ist, also sich quer zur axialen Richtung bezogen auf die Wellenachse der Adapterwelle erstreckt, insbesondere also in Umfangsrichtung bezogen auf die Wellenachse der Adapterwelle. Von Vorteil ist dabei, dass eine einfache Herstellung der Verliersicherung ausführbar ist.

Bei einer vorteilhaften Ausgestaltung ist der oder jeder Einlegering als Kunststoffspritzgussteil gefertigt. Von Vorteil ist dabei, dass eine einfache Herstellung kostengünstig ausführbar ist.

Bei einer vorteilhaften Ausgestaltung durchquert der Querschlitz einen Axialschlitz. Von Vorteil ist dabei, dass die Nasenbereiche zunächst in den Axialschlitz und schließlich in die Querschlitze einführbar sind. Auf diese Weise ist eine einfache schnelle Verbindung bewirkbar.

Bei einer vorteilhaften Ausgestaltung weist die Adapterwelle weitere Axialschlitze auf, wobei die Axialschlitze in Umfangsrichtung regelmäßig voneinander beabstandet sind. Von Vorteil ist dabei, dass eine hohe Elastizität in einfacher Weise erreichbar ist und ein in Umfangsrichtung ungleichmäßiges radial gerichtetes Aufwölben der Adapterwelle ermöglicht ist.

Bei einer vorteilhaften Ausgestaltung ist die Welle in einen als Hohlwellenbereich ausgeführten Bereich der Adapterwelle eingesteckt ist, insbesondere koaxial angeordnet ist zur Adapterwelle. Von Vorteil ist dabei, dass eine Schrumpfverbindung in einfacher Weise durch den auf die Adapterwelle aufgesteckte Spannring erreichbar ist.

Bei einer vorteilhaften Ausgestaltung sind die Axialschlitze zum axialen Ende der Adapterwelle offen ausgeführt, insbesondere münden also in die Umgebung, insbesondere Umgebungsluft. Von Vorteil ist dabei, dass eine hohe Elastizität der Adapterwelle in einfacher Weise erreichbar ist.

Bei einer vorteilhaften Ausgestaltung weist der Einlegering eine von seinem Nasenbereich in Umfangsrichtung beabstandeten, nach radial innen hervorragenden Stegbereich auf, welcher zumindest teilweise in den Querschlitz hineinragt. Von Vorteil ist dabei, dass eine Axialsicherung einfach realisierbar ist.

Bei einer vorteilhaften Ausgestaltung weist die Adapterwelle an ihrem axialen Endbereich eine Fase, insbesondere Einführschräge, auf. Von Vorteil ist dabei, dass das Aufstecken des Spannrings in einfacher Weise ermöglicht ist.

Bei einer vorteilhaften Ausgestaltung ragt der Stegbereich nach radial innen hervor und ist der radial innere Rand tangential gerichtet. Von Vorteil ist dabei, dass eine axiale Sicherung mittels Hineinragen in den Querschlitz erreichbar ist.

Bei einer vorteilhaften Ausgestaltung weist der Spannring an seinem axialen Endbereich eine Einführschräge auf. Von Vorteil ist dabei, dass eine Herstellung einfach und ohne besonderen Kraftaufwand ausführbar ist.

Bei einer vorteilhaften Ausgestaltung weist die Adapterwelle Axialschlitze auf, insbesondere in Umfangsrichtung voneinander beabstandete Axialschlitze, insbesondere in Umfangsrichtung regelmäßig voneinander beabstandete Axialschlitze. Von Vorteil ist dabei, dass die Adapterwelle ohne großen Kraftaufwand verformbar ist und dass die Verformung keine Wellenbildung in Umfangsrichtung erlaubt. Denn ohne Axialschlitze bestünde das Risiko, dass die Adapterwelle beim Andrücken des Gewindestifts an die Adapterwelle keine in Umfangsrichtung umlaufend radial gerichtete sinuswellenartigen Verläufe herausbildet sondern dass die Adapterwelle möglichst gleichmäßig an der Vollwelle anliegt.

Bei einer vorteilhaften Ausgestaltung ist die Welle in einen als Hohlwellenbereich ausgeführten Bereich der Adapterwelle eingesteckt, insbesondere koaxial angeordnet ist zur Adapterwelle. Von Vorteil ist dabei, dass die Welle in der Adapterwelle aufnehmbar ist und dabei zur Drehachse der Adapterwelle zentriert ist.

Bei einer vorteilhaften Ausgestaltung münden der oder die Axialschlitze am axialen Ende der Adapterwelle in die Umgebungsluft. Von Vorteil ist dabei, dass die Adapterwelle eine hohe Elastizität im axialen Endbereich aufweist.

Bei einer vorteilhaften Ausgestaltung weist die Adapterwelle zum axialen Ende hin einen zunehmenden Radialabstand auf, insbesondere einen sich in Umfangsrichtung erstreckenden, radial hervorragenden Wulst aufweist, so dass ein Hintergreifen des Spannrings vorgesehen ist, insbesondere also die Adapterwelle den Spannring hintergreift. Von Vorteil ist dabei, dass ein Einklipsen des Spannrings auf der Adapterwelle ermöglicht ist. Denn der elastisch nach radial innen ausgelenkte Wulst schnappt hinter dem Spannring auf und sichert somit den Spannring auf der Adapterwelle.

Insbesondere ist auf der vom Wulst axial abgewandten Seite an der Adapterwelle ein Wellenbund ausgeformt, welcher den Spannring axial begrenzt, insbesondere in Aufsteckrichtung. Von Vorteil ist dabei eine axiale Begrenzung in einfacher Weise ermöglicht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
Die Figuren 1 bis 6 zeigen ein erstes Ausführungsbeispiel.
Die Figuren 7 bis 12 zeigen ein zweites Ausführungsbeispiel.

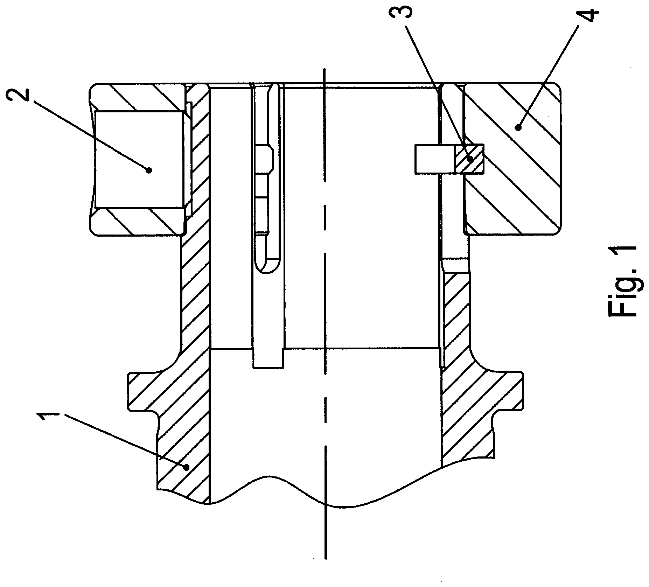

In der Figur 1 ist ein Längsschnitt durch eine Spanneinheit, also Spannanordnung, aufweisend eine Adapterwelle 1 mit aufgestecktem Spannring 4 und Einlegering 3 zur Verliersicherung des Spannrings 4, dargestellt.

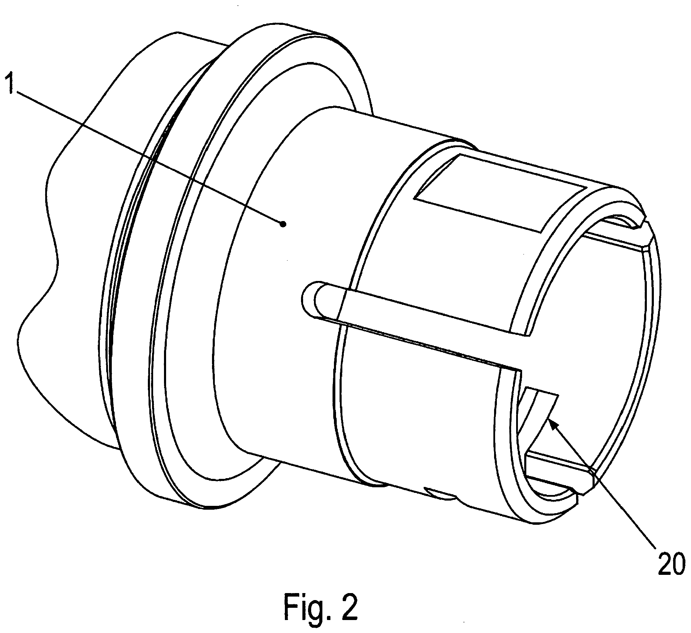

In der Figur 2 ist eine Schrägansicht aus einer ersten Blickrichtung auf die Adapterwelle 1 dargestellt.

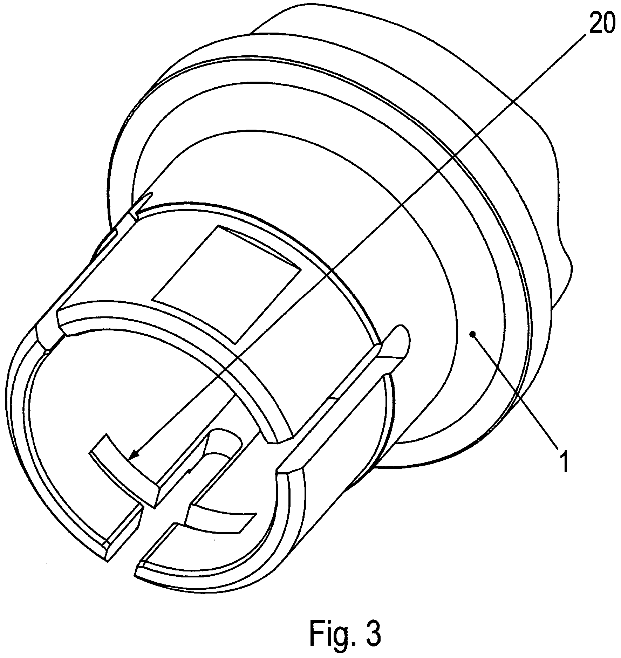

In der Figur 3 ist eine Schrägansicht aus einer anderen Blickrichtung auf die Adapterwelle 1 dargestellt.

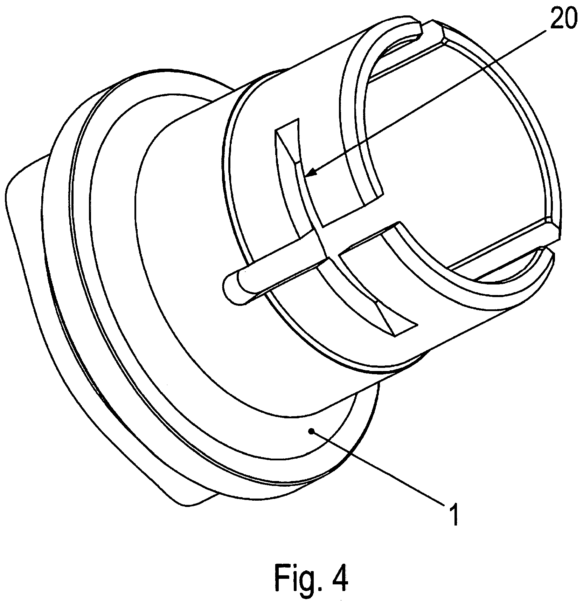

In der Figur 4 ist eine Schrägansicht aus wiederum einer anderen Blickrichtung auf die Adapterwelle 1 dargestellt.

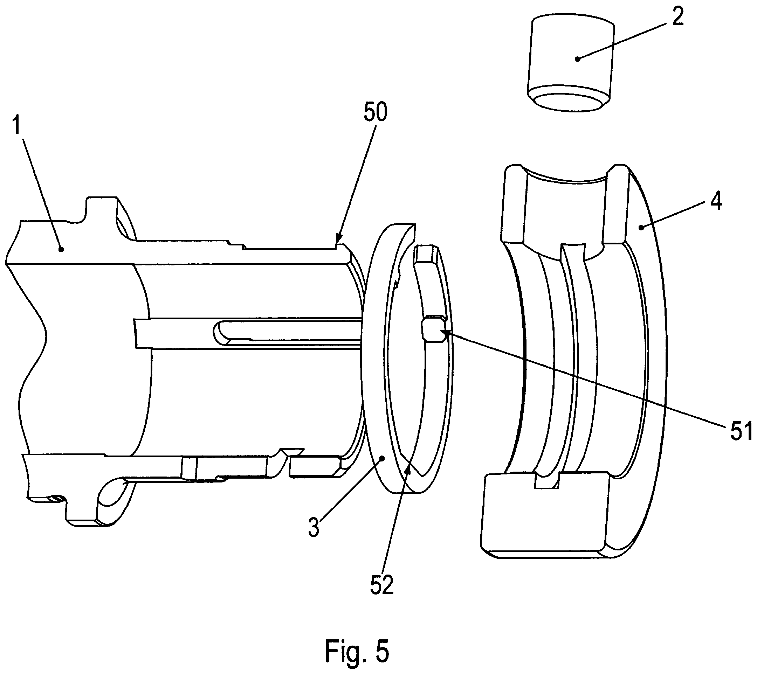

In der Figur 5 ist die Spanneinheit in Explosionsdarstellung in Schrägansicht dargestellt, wobei Adapterwelle 1 und Spannring 4 angeschnitten sowie der Einlegering 3 nicht angeschnitten dargestellt sind.

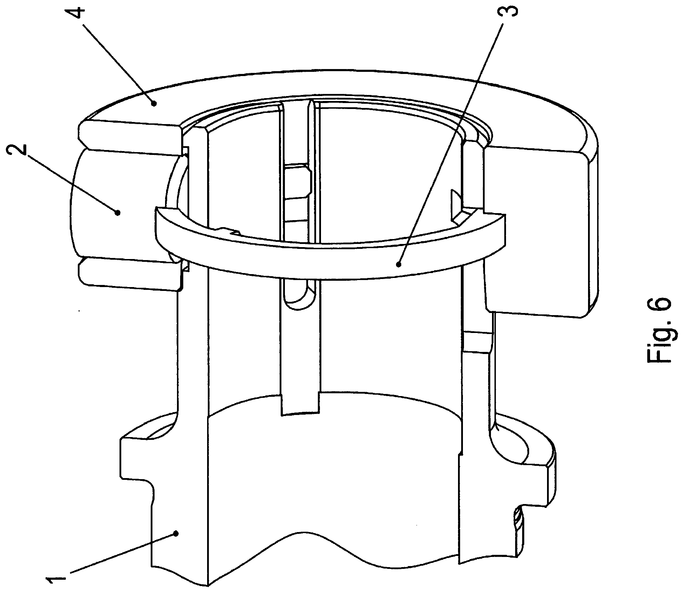

In der Figur 6 ist die Spanneinheit angeschnitten in Schrägansicht dargestellt.

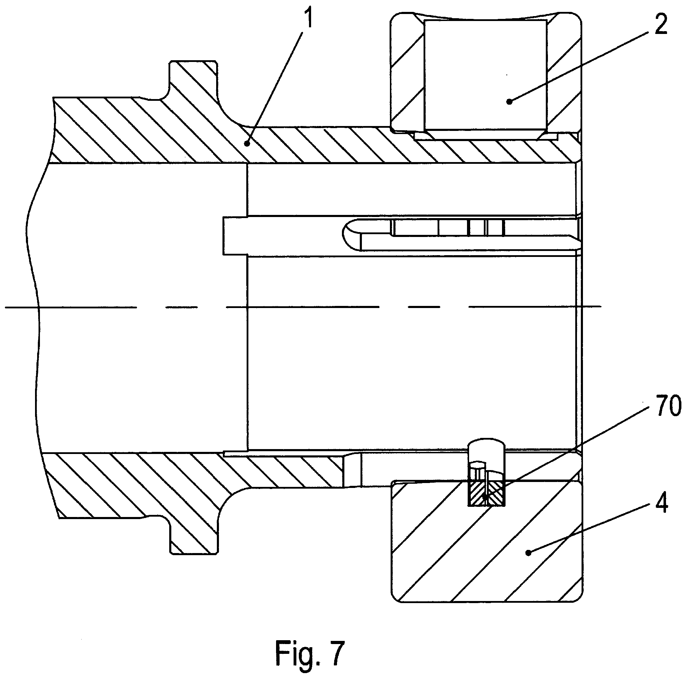

In der Figur 7 ist ein Längsschnitt durch eine andere Spannanordnung, insbesondere Spanneinheit dargestellt, wobei zwei Einlegeringe 70 statt des Einlegerings 3 der Figuren 1 bis 6 zur Verliersicherung verwendet sind.

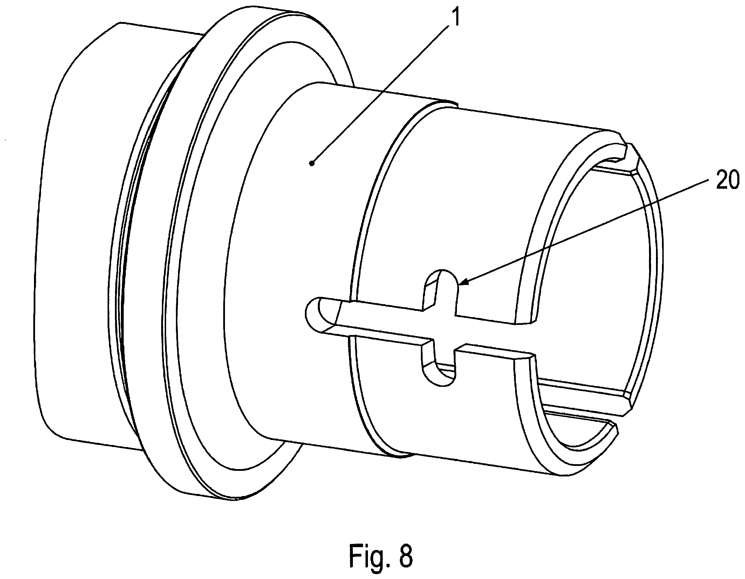

In der Figur 8 ist eine Schrägansicht der Adapterwelle 1 gezeigt.

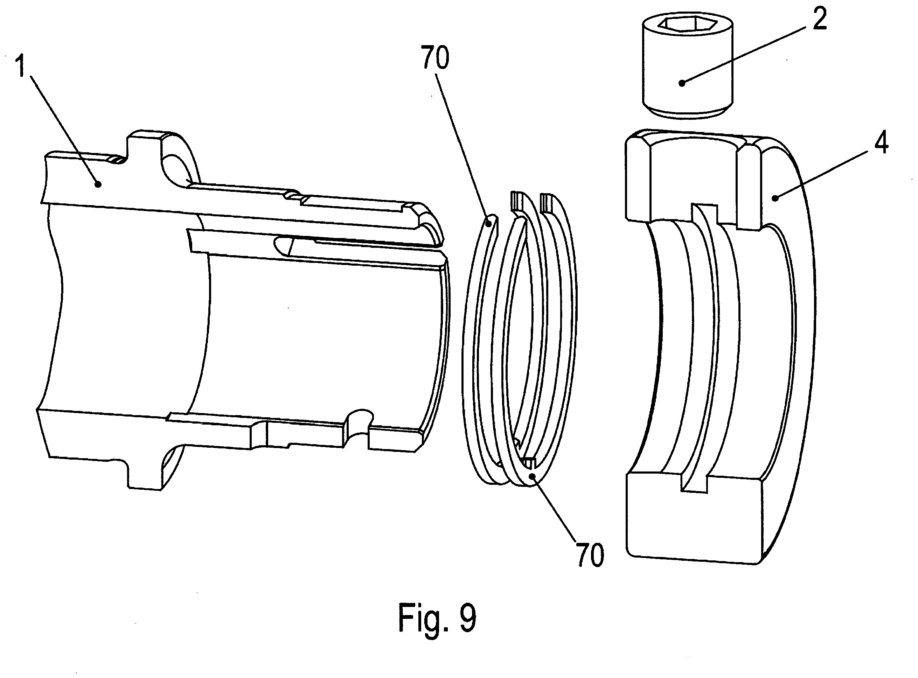

In der Figur 9 ist die Spannanordnung in Explosionsdarstellung dargestellt.

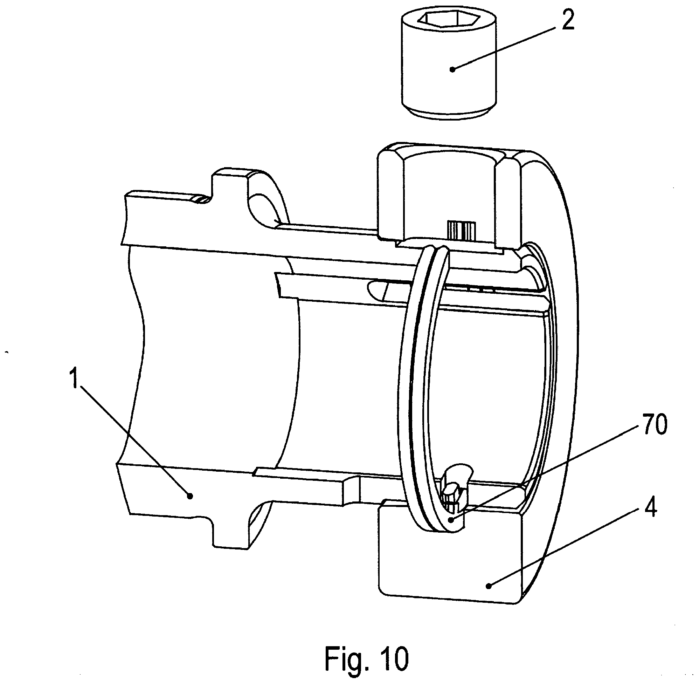

In der Figur 10 ist die Spannanordnung vor Einschrauben des Gewindestifts 2 in Schrägansicht dargestellt, wobei Adapterwelle 1 und Spannring 4 angeschnitten sowie der Einlegering 3 nicht angeschnitten dargestellt sind.

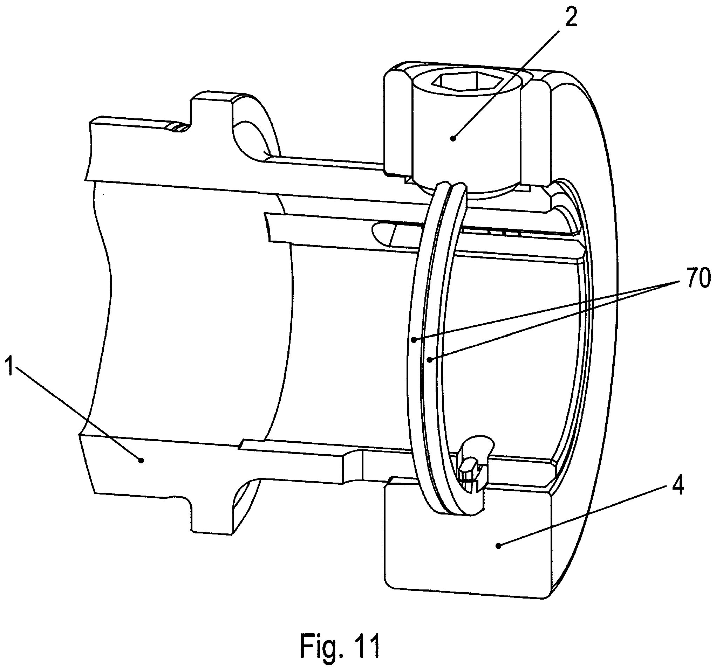

In der Figur 11 ist die Spannanordnung mit eingeschraubtem Gewindestift 2 angeschnitten in Schrägansicht dargestellt.

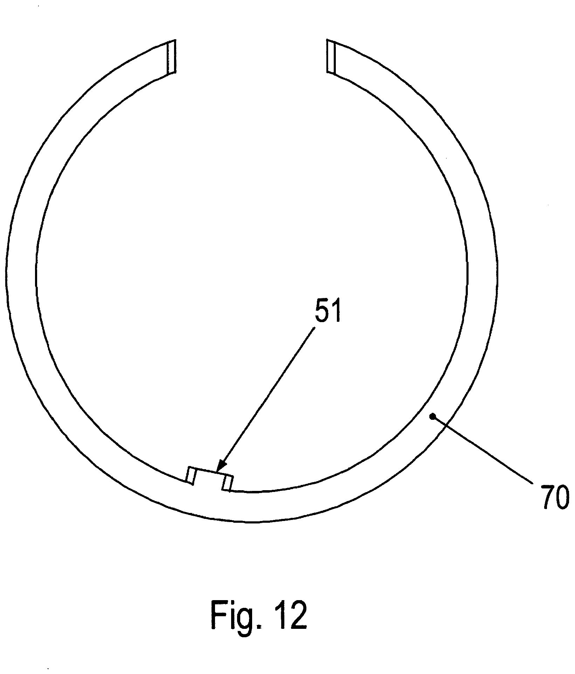

In der Figur 12 ist der Einlegering 70 in Draufsicht dargestellt.

Wie in den Figuren 1 bis 6 dargestellt, weist die Adapterwelle 1 einen Hohlwellenbereich auf, der axial sich erstreckende Schlitze, also Axialschlitze, aufweist. Vorzugsweise sind die Axialschlitze voneinander in Umfangsrichtung regelmäßig beabstandet und erstrecken sich von dem axial äußeren ersten Endberiech der Adapterwelle 1 bis zu einer axialen Position, die außerhalb des von dem Spannring 4 überdeckten axialen Bereich angeordnet ist. Die bevorzugt gewählte Anzahl der Schlitze beträgt drei.

In die Adapterwelle 1 ist eine in den Figuren nicht dargestellte Vollwelle eingeführt. Somit wird diese Vollwelle von der Adapterwelle 1 radial umgeben.

Ein Gewindestift 2 ist in eine durch den Spannring 4 radial durchgehende Gewindebohrung eingeschraubt und drückt auf eine an der Adapterwelle 1 angeordnete Abflachung 20.

Eine Abflachung ist an der Außenseite der Adapterwelle 1 ausgeführt und tangential zur Mittelachse oder Drehachse der Adapterwelle ausgerichtet.

Der Gewindestift 2 drückt auf die Abflachung.

Im von der Abflachung überdeckten axialen Bereich ist die Adapterwelle 1 an ihrem äußeren Umfang zylindrisch ausgeführt mit Ausnahme der Axialschlitze und eines Querschlitzes 20.

Somit ist mittels Einschrauben des Gewindestiftes 2 in die durch den Spannring durchgehende Gewindebohrung ein Andrücken der Adapterwelle 1 an die Vollwelle ermöglicht, insbesondere also eine Schrumpfverbindung realisiert.

Vorzugsweise ist der Querschlitz 20 diametral gegenüber von der Abflachung angeordnet und dient zum Einrasten des Einlegerings 3, welcher in einer in Umfangsrichtung umlaufend ausgebildeten Ringnut am Innenumfang des Spannrings 4 einschnappt. Dabei greift ein am Einlegering 3 ausgebildeter, nach radial innen hervorragender Stegbereich 51 in den Querschlitz 20 ein.

Dadurch ist eine Verliersicherung in axialer Richtung bewirkt.

Um eine in Umfangsrichtung wirkende Verliersicherung zu erhalten, sind am Einlegering 3 Nasenbereiche 51 ausgebildet, die am Einlegering 3 nach radial innen hervorragen.

Bei der Herstellung der Spannanordnung wird zunächst der Einlegering 3 in die an der Innenwandung des Spannrings 4 ausgebildete Ringnut eingelegt.

Der Einlegering 3 besteht aus einem elastischen Material, wie Kunststoff oder Aluminium. Der Einlegering 3 weist an einer Umfangsposition eine durchgehende Ausnehmung auf, ist also offen. Die nicht geschlossene Ausführung des Einlegerings 3 bewirkt eine hohe Elastizität und somit einfache Montage, insbesondere ein einfaches Einlegen in die Ringnut.

Beim Einlegen des Einlegerings 3 in die Ringnut wird die Öffnung des Einlegerings 3 in den Bereich der Gewindebohrung gebracht. Somit ist es dann für den Gewindestift 2 möglich, nach Aufstecken des Spannrings 4 auf die Adapterwelle 1, ungehindert durch die Öffnung des Einlegerings auf die Abflachung der Adapterwelle 1 zu drücken.

Beim Aufstecken des Spannrings 4 auf die Adapterwelle 1 dienen auch die Nasenbereiche 51 des Einlegerings 3 zur Ausrichtung, da diese Nasenbereiche 51 in die Axialschlitze eingreifen.

Auf diese Weise ist die Adapterwelle 1 in Umfangsrichtung gesichert. Denn der Einlegering 3 ist mittels der Nasenbereiche 51 in Umfangsrichtung formschlüssig mit der Adapterwelle 1 verbunden, insbesondere mittels des Eingreifens der Nasenberieche 51 in die Axialschlitze, und andererseits ist der Einlegering 3 mittels des auf die Abflachung der Adapterwelle 1 drückenden Gewindestifts 2 in Umfangsrichtung formschlüssig mit dem Spannring 4 verbunden.

Der Gewindestift 2 hat also nicht nur die Funktion, auf den Spannring 4 zu drücken und somit die Klemmung der Welle zu bewirken, insbesondere mittels Aufschrumpfen, sondern auch die Funktion, den Einlegering in Umfangsrichtung formschlüssig zu sichern.

Wie oben schon erwähnt, weist der Einlegering 3 zur axialen Sicherung den Stegbereich 50 auf, welcher in den Querschlitz 20 einrastet. Dabei ist der Querschlitz 20 senkrecht zu einem der Axialschlitze der Adapterwelle 1 angeordnet und erstreckt sich nur über einen Winkelberiech, der kleiner ist als der Winkelabstand zum nächsten Axialschlitz. Der Querschlitz 20 ist allerdings wie auch jeder der Axialschlitze radial durchgehend durch die Adapterwelle 1 ausgeführt. Der Querschlitz 20 erstreckt sich in Umfangsrichtung weiter als in axialer Richtung. Jeder Axialschlitz hingegen erstreckt sich in axialer Richtung weiter als in Umfangsrichtung.

Der Querschlitz 20 durchquert den Axialschlitz und ist am Umfang der Adapterwelle diametral zur Abflachung angeordnet, insbesondere ebenso wie dieser Axialschlitz.

Ebenso ist der Stegbereich 52 diametral zur Öffnung des Einlegerings 3 angeordnet.

Der Einlegering 3 bewirkt also zusammen mit dem Gewindestift 2 die Sicherung des Spanrings 4 in Umfangsrichtung und mittels seines in den Querschlitz 20 hineinragenden Stegbereichs 52 bewirkt der Einlegering 3 die Sicherung in axialer Richtung.

Vorzugsweise ist an der Adapterwelle 1 eine Einführschräge vorgesehen, die ein leichtgängiges Einschieben der Adapterwelle 1 auf den im Spannring 4 aufgenommenen Einlegering 3 bewirkt. Bei diesem Aufstecken des Spannrings 4 auf die Adapterwelle 1 wird die Adapterwelle 1 elastisch verformt, insbesondere radial zusammengedrückt, radial auf die in der Adapterwelle 1 aufgenommene Welle geschrumpft. Infolge der Axialschlitze ist diese elastische Verformung mit geringem Kraftaufwand bewirkbar.

Nach Erreichen der vorgesehenen Position des Spannrings 4 entspannt sich die Adapterwelle 1 und die Welle ist ohne besonderen Kraftaufwand in die Adapterwelle 1 einführbar. Danach wird der Gewindestift 2 weiter eingeschraubt, also angezogen, und drückt somit nach radial innen, wodurch ein Aufschrumpfen der Adapterwelle 1 auf die Welle bewirkt wird.

Die Adapterwelle 1, der Gewindestift 2 und der Einlegering 3 sowie der Spannring 4 bilden somit ein System zur kraftschlüssigen Verbindung aus.

Die Innenwandung des Spannrings 4 ist wie ein Bereich eines Rotationskörpers ausgeführt, also mit in jeder axialen Position konstantem Radialabstand, also von der Umfangsposition unabhängigen Radialabstand.

Wie in den Figuren 7 bis 12 dargestellt, ist aber auch statt des Einlegerings 3 ein Paar von Einlegeringen 70 verwendbar

Diese Einlegeringe 70 weisen im Unterschied zum Einlegering 3 keine Stegbereich 52 auf, sondern nur Nasenbereiche 51.

Wie in Figur 12 dargestellt, ist der jeweilige Einlegering 70 offenausgeführt, wobei die Öffnung nicht diametral gegenüber zum nach radial innen gerichteten Nasenbereich 51 angeordnet ist. Wie in Figur 9, 10 und 11 dargestellt, werden die beiden Einlegeringe 70 in der Ringnut des Spannrings 4 aufgenommen, wobei die Öffnungen derart ausgerichtet sind, dass der Gewindestift 2 durch die Öffnungen hindurch direkt auf die Abflachung der Adapterwelle 1 drückt.

Die beiden Einlegeringe 70 sind zwar gleichartig ausgeführt, aber zueinander um 180° verdreht angeordnet. Somit liegen die Einlegeringe 70 zwar aneinander an, die Nasenbereiche 51 sind aber an unterschiedlichen Umfangspositionen.

Das Paar von Einlegeringen 70 ist in die am Spannring 4 eingearbeitete Ringnut eingebracht. Somit ragen die Nasenberieche 51 nach radial innen hervor. Beim Aufstecken des Spannrings 4 auf die Adapterwelle 1 werden die Einlegeringe 70 derart in der Ringnut orientiert, also in eine derartigen Drehposition in Umfangsrichtung vorgesehen, dass die Nasenberieche 51 in einen der Axialschlitze der Adapterwelle 1 einschiebbar sind. Nach Beendigung des Aufsteckens werden die Einlegeringe 70 derart gegeneinander verdreht, dass die Nasenbereiche 51 in dem Querschlitz 20 verschoben werden und dabei auf zwei unterschiedlichen Seiten bezogen auf den Axialschlitz angeordnet sind. Auf diese Weise ist dann mittels der im Querschlitz sich befindenden Nasenbereiche 51 eine axiale Sicherung bewirkt. Außerdem ist die Drehposition der einlegeringe 70 dabei derart, dass die Öffnungen denselben Beriech in Umfangsrichtung aufweisen oder zumindest überlappen, so dass der Gewindestift 2 direkt auf die Abflachung der Adapterwelle 1 drücken kann.

Auf diese Weise ist aber auch eine Sicherung in Umfangsrichtung erreicht.

An der Adapterwelle 1 ist am axialen Endbereich ein nach radial außen hervorstehender Wulst 50 ausgeformt. Der Gewindestift 2 drückt auf eine an der Adapterwelle ausgebildete Abflachung, welche in Umfangsrichtung einen Umfangswinkelbereich überdeckt, welcher dem von dem Wulst 50 in Umfangsrichtung überdeckten Umfangswinkelbereich gleicht. Die radiale Erhebung ist hierbei relativ auf die Abflachung bezogen

Bei einem anderen erfindungsgemäßen Ausführungsbeispiel weist der Spannring 4 an seinem zu Beginn des Aufsteckens der Adapterwelle 1 zugewandten Endbereich zur einfachen Bewirkung der elastischen Schrumpfung, also elastischen Auslenkung des geschlitzten axialen Bereichs der Adapterwelle 1, eine Fase auf, die als Einführschräge wirkt und somit beim Einführen, also Aufstecken des Spannrings 4 auf die Adapterwelle 1, eine zunehmende elastische Auslenkung des geschlitzten Bereichs bewirkt.

Die Erfindung ermöglicht also eine Spannverbindung, insbesondere Schrumpfscheibenverbindung, zwischen einer Adapterwelle und einer Welle, insbesondere Vollwelle, mit integrierter Verliersicherung.

Bei einem anderen erfindungsgemäßen Ausführungsbeispiel ist der Einlegering 3 auch aus Stahl ausführbar.

### Bezugszeichenliste

- 1: Adapterwelle, insbesondere Hohlwellenbereich
- 2: Gewindestift
- 3: Einlegering
- 4: Spannring
- 20: Querschlitz
- 50: Wulst
- 51: Nasenbereich
- 52: Stegbereich
- 70: Einlegering

## Patentansprüche

1. Anordnung zur kraftschlüssigen Verbindung einer Adapterwelle (1) mit einer Welle mittels eines Spannrings (4),
wobei der Spannring (4) auf die Adapterwelle (1) aufgesteckt ist,
wobei die Welle in die Adapterwelle (1) eingesteckt ist,
wobei der Spannring (4) eine radial durchgehende Gewindebohrung aufweist, in welche ein Schraubteil, insbesondere Gewindestift (2), eingeschraubt ist, dass auf die Adapterwelle (1) drückt,
**dadurch gekennzeichnet, dass**
zumindest ein Einlegering (3) in einer in den Spannring (4) eingebrachten Ringnut, insbesondere in einer in die Innenwandung, insbesondere also in die hohle Seite, des Spannrings (4) eingebrachten Ringnut eingelegt ist und/oder zumindest teilweise aufgenommen ist,
wobei der oder jeder Einlegering (3) einen nach radial innen hervorragenden Nasenbereich (51) aufweist, welcher in einen Schlitz der Adapterwelle (1) zumindest teilweise hineinragt.

2. Anordnung nach Anspruch 1,
**dadurch gekennzeichnet, dass**
der Schlitz radial durchgehend ist, insbesondere durch die Wandung der hohlen Adapterwelle (1),
- wobei der Schlitz ein Axialschlitz ist, also sich in axialer Richtung bezogen auf die Wellenachse der Adapterwelle (1) erstreckt,
- oder wobei der Schlitz ein Querschlitz (20) ist, also sich quer zur axialen Richtung bezogen auf die Wellenachse der Adapterwelle (1) erstreckt, insbesondere also in Umfangsrichtung bezogen auf die Wellenachse der Adapterwelle (1).

3. Anordnung nach mindestens einem der vorangegangenen Ansprüche,
**dadurch gekennzeichnet, dass**
der oder jeder Einlegebereich als Kunststoffspritzgussteil gefertigt ist.

4. Anordnung nach mindestens einem der vorangegangenen Ansprüche,
**dadurch gekennzeichnet, dass**
der Querschlitz (20) einen Axialschlitz durchquert.

5. Anordnung nach mindestens einem der vorangegangenen Ansprüche,
**dadurch gekennzeichnet, dass**
die Adapterwelle (1) weitere Axialschlitze aufweist, wobei die Axialschlitze in Umfangsrichtung regelmäßig voneinander beabstandet sind.

6. Anordnung nach mindestens einem der vorangegangenen Ansprüche,
**dadurch gekennzeichnet, dass**
die Welle in einen als Hohlwellenbereich ausgeführten Bereich der Adapterwelle (1) eingesteckt ist, insbesondere koaxial angeordnet ist zur Adapterwelle (1).

7. Anordnung nach mindestens einem der vorangegangenen Ansprüche,
**dadurch gekennzeichnet, dass**
die Axialschlitze zum axialen Ende der Adapterwelle (1) offen ausgeführt sind, insbesondere also in die Umgebung, insbesondere Umgebungsluft, münden.

8. Anordnung nach mindestens einem der vorangegangenen Ansprüche,
**dadurch gekennzeichnet, dass**
der Einlegering (3) eine von seinem Nasenbereich (51) in Umfangsrichtung beabstandeten, nach radial innen hervorragenden Stegbereich (52) aufweist, welcher zumindest teilweise in den Querschlitz (20) hineinragt.

9. Anordnung nach mindestens einem der vorangegangenen Ansprüche,
**dadurch gekennzeichnet, dass**
die Adapterwelle (1) an ihrem axialen Endbereich eine Fase, insbesondere Einführschräge, aufweist.

10. Anordnung nach mindestens einem der vorangegangenen Ansprüche,
**dadurch gekennzeichnet, dass**
der Stegbereich (52) nach radial innen hervorragt und der radial innere Rand tangential gerichtet ist.

11. Anordnung nach mindestens einem der vorangegangenen Ansprüche,
**dadurch gekennzeichnet, dass**
der Spannring (4) an seinem axialen Endbereich eine Einführschräge aufweist.

12. Anordnung nach mindestens einem der vorangegangenen Ansprüche,
**dadurch gekennzeichnet, dass**
das Schraubteil auf eine, am äußeren Umfang der Adapterwelle (1) ausgeformte Abflachung drückt,
wobei die Adapterwelle (1) an ihrem axialen Endbereich einen nach radial außen erhebenden Wulst aufweist, welcher in Umfangsrichtung einen Umfangswinkelbereich überdeckt,
- der den vom Schraubteil in Umfangsrichtung überdeckten Umfangswinkelbereich enthält
- und/oder der dem von der Abflachung in Umfangsrichtung überdeckten Umfangswinkelbereich gleicht.

## Claims

1. An arrangement for the force-locked connection of an adapter shaft (1) to a shaft by means of a clamping ring (4),
wherein the clamping ring (4) is placed onto the adapter shaft (1),
wherein the shaft is inserted into the adapter shaft (1),
wherein the clamping ring (4) has a radially through-passing tapped bore into which there is screwed a screw part, in particular a threaded pin (2), which presses onto the adapter shaft (1),
**characterised in that**
at least one insert ring (3) is inserted and/or is at least partially received in an annular groove made in the clamping ring (4), in particular in an annular groove made in the inner wall, in particular therefore in the hollow side, of the clamping ring (4), ,
wherein the or each insert ring (3) has a nose region (51), projecting radially inwards, which at least partially projects into a slot of the adapter shaft (1).

2. An arrangement according to claim 1,
**characterised in that**
the slot is radially through-passing, in particular through the wall of the hollow adapter shaft (1),
- wherein the slot is an axial slot, therefore extends in an axial direction related to the shaft axis of the adapter shaft (1),
- or wherein the slot is a transverse slot (20), therefore extends transversely to the axial direction related to the shaft axis of the adapter shaft (1), in particular therefore in a circumferential direction related to the shaft axis of the adapter shaft (1).

3. An arrangement according to at least one of the preceding claims,
**characterised in that**
the or each insert region is manufactured as a plastics injection-moulded part.

4. An arrangement according to at least one of the preceding claims,
**characterised in that**
the transverse slot (20) traverses an axial slot.

5. An arrangement according to at least one of the preceding claims,
**characterised in that**
the adapter shaft (1) has further axial slots, wherein the axial slots are regularly spaced apart from one another in a circumferential direction.

6. An arrangement according to at least one of the preceding claims,
chararacterised in that
the shaft is inserted into a region, in the form of a hollow shaft region, of the adapter shaft (1), in particular is arranged coaxially with the adapter shaft (1).

7. An arrangement according to at least one of the preceding claims,
**characterised in that**
the axial slots are open towards the axial end of the adapter shaft (1), in particular therefore open into the surroundings, in particular the ambient air.

8. An arrangement according to at least one of the preceding claims,
**characterised in that**
the insert ring (3) has a flange region (52), projecting radially inwards and spaced apart in a circumferential region from its nose region (51), which projects at least partially into the transverse slot (20).

9. An arrangement according to at least one of the preceding claims,
**characterised in that**
the adapter shaft (1) has a bevel, in particular an insertion slope, at its axial end region.

10. An arrangement according to at least one of the preceding claims,
charcterised in that
the flange region (52) projects radially inwards and the radially inner edge is directed tangentially.

11. An arrangement according to at least one of the preceding claims,
**characterised in that**
the clamping ring (4) has an insertion slope at its axial end region.

12. An arrangement according to at least one of the preceding claims,
**characterised in that**
the screw part presses onto a flattened portion formed at the outer circumference of the adapter shaft (1),
wherein the axial end region of the adapter shaft (1) has a swelling rising radially outwards, which swelling covers a circumferential angular region in a circumferential direction,
- which swelling includes the circumferential angular region covered by the screw part in a circumferential direction
- and/or which swelling corresponds to the circumferential angular region covered by the flattened region in a circumferential direction.

## Revendications

1. Ensemble conçu pour relier un arbre adaptateur (1) à un arbre par engagement positif, au moyen d'une bague de serrage (4),
la bague de serrage (4) étant emboîtée sur l'arbre adaptateur (1),
l'arbre étant emboîté dans ledit arbre adaptateur (1),
ladite bague de serrage (4) étant munie d'un perçage taraudé, radialement ininterrompu, dans lequel est vissée une pièce vissable, en particulier une broche filetée (2) exerçant une pression sur l'arbre adaptateur (1),
**caractérisé par le fait**
**qu'**au moins une bague insérable (3) est introduite, et/ou au moins en partie logée dans une rainure annulaire pratiquée dans la bague de serrage (4), notamment dans une rainure annulaire ménagée dans la paroi intérieure, c'est-à-dire, en particulier, dans le côté creux de ladite bague de serrage (4),
sachant que la, ou chaque bague insérable (3) est dotée d'une zone protubérante (51) faisant saillie vers l'intérieur, dans le sens radial, et pénétrant au moins partiellement dans une fente de l'arbre adaptateur (1).

2. Ensemble selon la revendication 1,
**caractérisé par le fait que**
la fente est ininterrompue dans le sens radial et traverse, en particulier, la paroi de l'arbre adaptateur creux (1),
- ladite fente étant une fente axiale, c'est-à-dire qu'elle s'étend dans la direction axiale par rapport à l'axe de l'arbre adaptateur (1),
- ou bien ladite fente étant une fente transversale (20), c'est-à-dire qu'elle s'étend transversalement à la direction axiale par rapport à l'axe dudit arbre adaptateur (1), à savoir, en particulier, dans la direction périphérique par rapport audit axe de l'arbre adaptateur (1).

3. Ensemble selon au moins l'une des revendications précédentes,
**caractérisé par le fait que**
la, ou chaque région insérable est produite en tant que pièce en matière plastique moulée par injection.

4. Ensemble selon au moins l'une des revendications précédentes,
**caractérisé par le fait que**
la fente transversale (20) coupe une fente axiale.

5. Ensemble selon au moins l'une des revendications précédentes,
**caractérisé par le fait que**
l'arbre adaptateur (1) comporte des fentes axiales additionnelles, lesquelles fentes axiales sont espacées régulièrement les unes des autres dans la direction périphérique.

6. Ensemble selon au moins l'une des revendications précédentes,
**caractérisé par le fait que**
l'arbre est emboîté dans une région de l'arbre adaptateur (1) conçue sous la forme d'une zone d'arbre creux et est disposé, en particulier, coaxialement audit arbre adaptateur (1).

7. Ensemble selon au moins l'une des revendications précédentes,
**caractérisé par le fait que**
les fentes axiales sont de réalisation ouverte vers l'extrémité axiale de l'arbre adaptateur (1), c'est-à-dire qu'elles débouchent notamment dans l'espace environnant, en particulier dans l'air ambiant.

8. Ensemble selon au moins l'une des revendications précédentes,
**caractérisé par le fait que**
la bague insérable (3) est pourvue d'une zone (52) formant membrure qui fait saillie vers l'intérieur dans le sens radial, est située à distance de sa zone protubérante (51) dans la direction périphérique, et pénètre au moins partiellement dans la fente transversale (20).

9. Ensemble selon au moins l'une des revendications précédentes,
**caractérisé par le fait que**
l'arbre adaptateur (1) est muni d'un chanfrein, en particulier d'un biseau d'insertion au niveau de sa région extrême axiale.

10. Ensemble selon au moins l'une des revendications précédentes,
**caractérisé par le fait que**
la zone (52) formant membrure fait saillie vers l'intérieur dans le sens radial, et le bord radialement intérieur est orienté tangentiellement.

11. Ensemble selon au moins l'une des revendications précédentes,
**caractérisé par le fait que**
la bague de serrage (4) est pourvue d'un biseau d'insertion au niveau de sa région extrême axiale.

12. Ensemble selon au moins l'une des revendications précédentes,
**caractérisé par le fait que**
la pièce vissable exerce une pression sur un méplat façonné sur le pourtour extérieur de l'arbre adaptateur (1),
ledit arbre adaptateur (1) étant muni, au niveau de sa région extrême axiale, d'un bourrelet protubérant vers l'extérieur dans le sens radial et couvrant, dans la direction périphérique, une plage d'angles circonférentiels
- qui inclut la plage d'angles circonférentiels couverte par ladite pièce vissable, dans la direction périphérique,
- et/ou est identique à la plage d'angles circonférentiels couverte par ledit méplat dans la direction périphérique.
